(19) Europäisches Patentamt
European Patent Office
Office européen des brevets

(11) **EP 3 576 972 B1**

(12) **EUROPÄISCHE PATENTSCHRIFT**

(45) Veröffentlichungstag und Bekanntmachung des Hinweises auf die Patenterteilung:
**19.07.2023 Patentblatt 2023/29**

(21) Anmeldenummer: **18701684.5**

(22) Anmeldetag: **15.01.2018**

(51) Internationale Patentklassifikation (IPC):
**B60K 13/04** (2006.01)    **B60K 15/04** (2006.01)

(52) Gemeinsame Patentklassifikation (CPC):
**B60K 15/04; B60K 13/04;** B60K 2015/0458; B60K 2015/0461

(86) Internationale Anmeldenummer:
**PCT/EP2018/050895**

(87) Internationale Veröffentlichungsnummer:
**WO 2018/141539 (09.08.2018 Gazette 2018/32)**

(54) **EINFÜLLSTUTZEN FÜR EINEN BETRIEBSFLÜSSIGKEITSBEHÄLTER FÜR EIN KRAFTFAHRZEUG MIT VERBESSERTEM FEHLBETANKUNGSSCHUTZ**

FILLER NECK FOR AN OPERATION FLUID CONTAINER FOR A MOTOR VEHICLE HAVING IMPROVED MISFUELING PROTECTION

TUBULURE DE REMPLISSAGE POUR CONTENANT DE LIQUIDE DE FONCTIONNEMENT DESTINÉ À UN VÉHICULE AUTOMOBILE, COMPRENANT PROTECTION AMÉLIORÉE CONTRE LES ERREURS DE RAVITAILLEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.01.2017 DE 102017201515**

(43) Veröffentlichungstag der Anmeldung:
**11.12.2019 Patentblatt 2019/50**

(73) Patentinhaber: **Kautex Textron GmbH & Co. KG 53229 Bonn (DE)**

(72) Erfinder:
• **SCHWENK, Christoph 56743 Mendig (DE)**
• **HOLZKÄMPER, Dirk 76297 Stutensee (DE)**

(74) Vertreter: **Richly & Ritschel Patentanwälte PartG mbB Sattlerweg 20 51429 Bergisch Gladbach (DE)**

(56) Entgegenhaltungen:
**EP-A1- 2 199 266    EP-A1- 2 789 490 EP-A1- 2 927 040    DE-A1-102014 010 989**

**Beschreibung**

Die vorliegende Erfindung betrifft einen Einfüllstutzen für einen Betriebsflüssigkeitsbehälter für ein Kraftfahrzeug, wobei der Einfüllstutzen einen Magneten zum Betätigen einer Fehlbetankungsschutzvorrichtung eines in den Einfüllstutzen eingeführten Zapfventils aufweist.

Aus dem Stand der Technik sind Einfüllstutzen für Betriebsflüssigkeitsbehälter hinlänglich bekannt, die eine Fehlbetankungsschutzvorrichtung in Form eines Ringmagneten aufweisen. Der Ringmagnet umschließt dabei einen Einführkanal des Einfüllstutzens, in den ein Zapfventil bzw. eine Zapfpistole zur Befüllung des Betriebsflüssigkeitsbehälters einführbar ist, so dass ein Schließmechanismus des Zapfventils mittels des Ringmagneten freigeschaltet werden kann.

Bei den aus dem Stand der Technik bekannten Einfüllstutzen bestehen die jeweiligen Ringmagnete aus Neodym-Eisen-Bohr (NdFeB) und weisen eine Remanenzflussdichte von üblicherweise 1,2 bis 1,3 T (Tesla) und eine Koerzitivfeldstärke von 800 kA/m bis 900 kA/m (Kiloampere pro Meter) auf. Die entsprechenden Remanenzflussdichten und Koerzitivfeldstärken resultieren zusammen mit den Abmessungen bzw. dem Volumen des Magneten in einem magnetischen Moment, das eine ausreichende Größe aufweist, um einen Schließmechanismus eines Zapfventils in einem Temperaturbereich von -40°C bis +80°C zuverlässig betätigen zu können. Die DE 20 2010 001 147 U1 beschreibt einen entsprechenden Einfüllstutzen.

Nachteilig bei den aus dem Stand der Technik bekannten Einfüllstutzen ist, dass das Material des Ringmagneten, also Neodym-Eisen-Bohr, sehr korrosionsempfindlich ist. Dies führt bei unvermeidlichem Luftkontakt zu Korrosion und damit zunehmender Zerstörung und zunehmender Verschlechterung der Funktionstüchtigkeit des Ringmagneten. Insbesondere bei Einfüllstutzen für Harnstoffbehälter stellt die Korrosion des Magneten ein großes Problem dar, da wässrige Harnstofflösung hoch korrosiv ist. Um diesem Problem entgegenzuwirken, ist es aus dem Stand der Technik bekannt, den Ringmagneten mit einer Schutzschicht aus Kunststoff zu versehen. Dies treibt jedoch die Kosten für den Ringmagneten in die Höhe. Ferner ist das Material Neodym-Eisen-Bohr in dessen Gewinnung und in dessen Herstellung sehr kostenintensiv.

In diesem Zusammenhang ist aus der EP 2 927 040 A1 ein Befüllkopf mit einem Einfüllstutzen für ein Zapfventil mit einem Magnetelement, das aus einem magnetischen Kunststoffmaterial gebildet ist, zum Freigeben einer Zapfventilautomatik des Zapfventils bekannt.

Die EP 2 789 490 A1 betrifft einen Befüllkopf mit einem Einfüllstutzen für ein Zapfventil, mit einem ersten Gehäuseteil mit einem ersten Einfüllstutzenabschnitt; einem zweiten Gehäuseteil mit einem zweiten Einfüllstutzenabschnitt; einem Dichtelement zwischen dem ersten und dem zweiten Einfüllstutzenabschnitt; und einem Magnetelement, das mit dem Dichtelement mechanisch verbunden ist.

Die DE 10 2014 010 989 A1 betrifft einen Einfüllstutzen für einen Harnstoffbehälter, umfassend ein Stutzengehäuse, welches eine erste Aufnahmestruktur für eine Zapfpistole und einen Einfüllkanal in ein Einfüllrohr des Behälters oder direkt in den Behälter definiert, wobei das Stutzengehäuse ein Gehäuseoberteil mit einem Mundlochstutzen, ein Gehäuseunterteil und einen Einfülltrichter umfasst, wobei der Einfülltrichter einstückig mit dem Gehäuseoberteil ausgebildet ist, das Gehäuseunterteil eine zweite Aufnahmestruktur für den Einfülltrichter umfasst, und wobei der Einfülltrichter sich in die zweite Aufnahmestruktur des Gehäuseunterteils erstreckt.

Außerdem sind aus der EP 2 199 266 A1 hartmagnetische Werkstoffe und daraus hergestellte Magnete bekannt. Einem modifizierten Strontiumferrit werden Lanthan und Kobalt zugegeben.

Der vorliegenden Erfindung liegt die Aufgabe zugrunde, einen Einfüllstutzen für einen Betriebsflüssigkeitsbehälter für ein Kraftfahrzeug bereitzustellen, der kostengünstig herzustellen ist, der eine verminderte Korrosionsempfindlichkeit aufweist, und der gleichzeitig eine genügend hohe Remanenzflussdichte und Koerzitivfeldstärke aufweist, um einen Schließmechanismus eines Zapfventils in einem breiten Temperaturbereich von -40°C bis +80°C zuverlässig zu bedienen.

Die der vorliegenden Erfindung zugrundeliegende Aufgabe wird durch einen Einfüllstutzen für einen Betriebsflüssigkeitsbehälter für ein Kraftfahrzeug mit den Merkmalen des Anspruchs 1 gelöst. Vorteilhafte Ausgestaltungen des Einfüllstutzens sind in den abhängigen Ansprüchen beschrieben.

Im Genaueren wird die der vorliegenden Erfindung zugrundeliegende Aufgabe durch einen Einfüllstutzen für einen Betriebsflüssigkeitsbehälter für ein Kraftfahrzeug gelöst, der eine Einführöffnung aufweist, über die ein Zapfventil in einen Einführkanal des Einfüllstutzens einführbar ist, wobei der Einfüllstutzen einen Magneten aufweist, der in einer Betriebsflüssigkeitseinfüllrichtung stromabwärts der Einführöffnung angeordnet ist. Der Einfüllstutzen ist dadurch gekennzeichnet, dass der Magnet als Ferritmagnet ausgebildet ist.

Der erfindungsgemäße Einfüllstutzen weist erheblich geringere Produktionskosten als aus dem Stand der Technik bekannte Einfüllstutzen auf, da das Material, aus dem der Magnet besteht, ein Ferrit ist. Ferrit ist in der Gewinnung und in der Produktion erheblich kostengünstiger als Neodym-Bohr-Eisen. Darüber hinaus weist der erfindungsgemäße Einfüllstutzen die gleiche Funktionalität und Zuverlässigkeit wie die aus dem Stand der Technik bekannte Einfüllstutzen hinsichtlich der Betätigung einer magnetisch betätigbaren Fehlbetankungsschutzvorrichtung eines Zapfventils auf.

Der Betriebsflüssigkeitsbehälter ist vorzugsweise als Harnstoffbehälter zur Aufnahme von wässriger Harnstofflösung ausgebildet. Folglich ist der Harnstoffbehälter vorzugsweise mit einer wässrigen Harnstofflösung gefüllt.

Der Einfüllstutzen ist üblicherweise mittels eines Einfüllrohrs bzw. eines Einfüllschlauchs mit dem Betriebsflüssigkeitsbehälter fluidverbunden. Im Genaueren ist der Einführkanal des Einfüllstutzens mit dem Betriebsflüssigkeitsbehälterinnenraum fluidverbunden.

Der Einfüllstutzen ist vorzugsweise auch mittels eines Nachfüllgebindes befüllbar. Beispielsweise kann ein Schlauch bzw. ein Rohr eines Nachfüllgebindes in den Einfüllstutzen eingeführt werden. Ferner kann vorzugsweise auch eine Kruse-Flasche mit dem Einfüllstutzen verbunden werden, so dass der Betriebsflüssigkeitsbehälter mittels der Kruse-Flasche befüllbar ist.

Eine Kruse-Flasche weist eine Verbindungsbaugruppe zur Verbindung eines Ausgangsbehälters und eines Zielbehälters auf. Die Verbindungsbaugruppe weist einen Auslasszylinder mit einer mit dem Ausgangsbehälter verbindbaren ersten Stirnseite auf, wobei die erste Stirnseite offen ist oder in ihrem Bereich wenigstens eine Öffnung des Auslasszylinders angeordnet ist, einer zweiten geschlossenen Stirnseite und mindestens einer Auslassöffnung in einer Mantelfläche. Ferner weist die Verbindungsbaugruppe einen den Auslasszylinder im Bereich der Auslassöffnung umgebenden Steuerzylinder auf, wobei der Auslasszylinder und der Steuerzylinder in einer Betriebsstellung, in der die Verbindungsbaugruppe mit dem Zielbehälter verbunden ist, zwischen einer Schließstellung, in der der Steuerzylinder einen Strömungspfad durch die Auslassöffnung des Auslasszylinders unterbricht und einer Öffnungsstellung, in der der Steuerzylinder den Strömungspfad durch die Auslassöffnung des Auslasszylinders freigibt, verschiebbar zueinander ausgebildet sind.

Der Magnet / Ferritmagnet ist zum Freischalten bzw. Betätigen einer Fehlbetankungsschutzvorrichtung eines in den Einführkanal eingeführten Zapfventils ausgebildet.

Ein Ferritmagnet ist ein Oberbegriff für einen Magneten, der ein Ferrit umfasst. Beispielsweise ist ein Strontiumferrit-Magnet, ein Bariumferrit-Magnet oder ein Kobaltferrit-Magnet ein Ferritmagnet.

Der Ferritmagnet weist als Material vorzugsweise $SrFe_{12}O_{19}$ (Strontium-Ferrite, Strontium-Hexaferrite) auf. Dabei steht "Sr" für Strontium, "Fe" für Eisen und "O" für Sauerstoff.

Der Ferritmagnet ist vorzugsweise außerhalb des Einführkanals angeordnet. Es ist auch möglich, dass der Ferritmagnet derart innerhalb des Einfüllstutzens angeordnet ist, dass der Ferritmagnet bei einem Befüllvorgang mit der in den Betriebsflüssigkeitsbehälter einzufüllenden Betriebsflüssigkeit in direkten Kontakt kommt. In diesem Fall ist der Ferritmagnet nicht durch eine Wandung des Einfüllstutzens von dem Einführkanal getrennt, sondern ist bei einem Befüllvorgang des Betriebsflüssigkeitsbehälters mit der einzufüllenden Betriebsflüssigkeit in direkten Kontakt bringbar. Dabei kann der Ferritmagnet einen Teil des Einführkanals des Einfüllstutzens definieren. Insbesondere wenn der Ferritmagnet ringförmig ausgebildet ist, kann der Ferritmagnet einen Teil des Einführkanals definieren.

Bei dem erfindungsgemäßen Einfüllstutzen ist es aufgrund der Korrosionsbeständigkeit des Ferritmagneten nicht notwendig, dass der Ferritmagnet von einer den Ferritmagneten umschließenden Schutzschicht umschlossen ist. Bei aus dem Stand der Technik bekannten Einfüllstutzen ist der Magnet stets von einer Schutzschicht umhüllt, die üblicherweise als Kunststoffschicht ausgebildet ist. Mit anderen Worten weist der Ferritmagnet keine diesen umhüllende/einschließende Schutzschicht auf.

Der Ferritmagnet umspannt vorzugsweise einen Umfang des Einführkanals.

Der Einfüllstutzen ist derart ausgebildet, dass der Ferritmagnet (15) als Strontiumferrit-Magnet ausgebildet ist.

Der Einfüllstutzen ist derart ausgebildet, dass der Strontiumferrit-Magnet mit Lanthan und/oder Kobalt dotiert ist.

Der entsprechend ausgebildete Einfüllstutzen bietet den Vorteil, dass durch die Dotierung des Strontiumferrit-Magneten mit Lanthan oder Kobalt oder durch Lanthan und Kobalt sowohl die Remanenzflussdichte als auch die Koerzitivfeldstärke im Vergleich zu undotierten Strontiumferrit-Magneten erhöht sind. So ist es durch eine Dotierung des Strontiumferrit-Magneten mit Lanthan oder Kobalt oder durch eine Dotierung mit Lanthan und Kobalt möglich, dass die Remanenzflussdichte in einen Bereich zwischen 0,4 T und 0,44 T, vorzugsweise zwischen 0,41 T und 0,43 T liegt. Ferner ist es durch eine Dotierung des Strontiumferrit-Magneten mit Lanthan oder Kobalt oder durch Dotierung mit Lanthan und Kobalt möglich, dass die Koerzitivfeldstärke in einem Bereich von 240 kA/m und 380 kA/m, vorzugsweise zwischen 280 kA/m und 310 kA/m liegt.

Insbesondere ist es bei ringförmig ausgebildeten Strontiumferrit-Magneten mit einem Außendurchmesser im Bereich von 34 mm bis 45 mm, einem Innendurchmesser im Bereich von 21 mm bis 24 mm und einer Bauhöhe im Bereich von 10 mm bis 15 mm durch eine Dotierung mit Lanthan oder Kobalt oder durch eine Dotierung mit Lanthan und Kobalt möglich, dass das magnetische Moment des so ausgebildeten Ringmagneten eine Größe/Stärke aufweist, die ausreichend groß ist, so dass ein Schließmechanismus eines Zapfventils, insbesondere ein Schließmechanismus eines Zapfventils für wässrige Harnstofflösung, zuverlässig in einem Temperaturbereich von -40°C bis +80°C mittels des Ringmagneten betätigbar ist. Das magnetische Moment ergibt sich aus dem Materialparametern, also der Remanenzflussdichte und der Koerzitivfeldstärke, und den Abmessungen des Magneten.

Durch eine entsprechende Ausgestaltung des Strontiumferrit-Magneten ist es daher ermöglicht, dass eine Fehlbetankungsschutzvorrichtung des Zapfventils durch den Strontiumferrit-Magneten zuverlässig in einem Temperaturbereich zwischen -40°C und +80°C betätigbar ist.

Vorzugsweise wird der Ferritmagnet durch Sintern einer Materialzusammensetzung erhalten. Diese Materialzusammensetzung umfasst vorzugsweise Strontiumoxid (SrO). Weiter vorzugsweise umfasst die Materialzusammensetzung Kalziumoxid (CaO). Weiter vorzugsweise umfasst die Materialzusammensetzung Aluminiumoxid ($Al_2O_3$). Weiter vorzugsweise umfasst die Materialzusammensetzung Eisenoxid ($Fe_2O_3$). Weiter vorzugsweise umfasst die Materialzusammensetzung Siliziumoxid ($SiO_2$). Weiter vorzugsweise umfasst die Materialzusammensetzung Kobaltoxid (CoO). Weiter vorzugsweise umfasst die Materialzusammensetzung Lanthanoxid ($La_2O_3$).

Dabei liegt das Strontiumoxid (SrO) vorzugsweise in einer Mol-Konzentration von 14% bis 17%, vorzugsweise von 14,495% vor. Weiter vorzugsweise liegt das Kalziumoxid (CaO) in einer Mol-Konzentration von 0,4% bis 1%, vorzugsweise von 0,499% vor. Weiter vorzugsweise liegt das Aluminiumoxid ($Al_2O_3$) in einer Mol-Konzentration von 0,3% bis 1,5%, vorzugsweise von 0,498% vor. Weiter vorzugsweise liegt das Eisenoxid ($Fe_2O_3$) in einer Mol-Konzentration von 83% bis 86%, vorzugsweise von 83,495% vor. Weiter vorzugsweise liegt das Siliziumoxid ($SiO_2$) in einer Mol-Konzentration von 0,3% bis 1%, vorzugsweise von 0,415% vor. Weiter vorzugsweise liegt das Kobaltoxid (CoO) in einer Mol-Konzentration von 0,3% bis 0,6%, vorzugsweise von 0,349% vor. Weiter vorzugsweise liegt das Lanthanoxid ($La_2O_3$) in einer Mol-Konzentration von 0,2% bis 0,6%, vorzugsweise von 0,249% vor.

Weiter vorzugsweise ist der Einfüllstutzen derart ausgebildet, dass das Material des Strontiumferrit-Magneten als $Sr_{1-x}La_xFe_{12-y}Co_yO_{19}$ ausgebildet ist, wobei x und y in folgenden Wertebereichen sind: $0,1 \leq x \leq 0,16$ und $0,1 \leq y \leq 0,16$.

Durch eine entsprechende Ausbildung des Strontiumferrit-Magneten wird eine besonders hohe Remanenzflussdichte und eine besonders hohe Koerzitivfeldstärke erzielt.

Bei einer Ausgestaltung des Strontiumferrit-Magneten mit einem Material gemäß der Formel $Sr_{1-x}La_xFe_{12-y}Co_yO_{19}$ liegen x und y vorzugsweise in den folgenden Wertebereichen: $0,12 \leq x \leq 0,15$; $0,12 \leq y \leq 0,15$. Weiter vorzugsweise liegen x und y vorzugsweise in den folgenden Wertebereichen: $0,13 \leq x \leq 0,15$; $0,13 \leq y \leq 0,15$. Weiter vorzugsweise weisen x und y einen Wert von 0,142 auf.

Vorzugsweise ist der Einfüllstutzen derart ausgebildet, dass der Ferritmagnet eine Remanenzflussdichte im Bereich von 0,4 T bis 0,44 T, weiter vorzugsweise zwischen 0,41 T und 0,43 T, und eine Koerzitivfeldstärke im Bereich von 240 kA/m bis 380 kA/m, weiter vorzugsweise zwischen 280 kA/m und 310 kA/m aufweist.

Durch eine entsprechende Ausgestaltung des Ferritmagneten ist es daher ermöglicht, dass eine Fehlbetankungsschutzvorrichtung des Zapfventils durch den Ferritmagneten zuverlässig in einem Temperaturbereich zwischen -40°C und +80°C betätigbar ist. Der Ferritmagnet ist vorzugsweise ringförmig und weist einen Außendurchmesser im Bereich von 34 mm bis 45 mm, einen Innendurchmesser im Bereich von 21 mm bis 24 mm und eine Höhe im Bereich von 10 mm bis 15 mm auf. Bei diesen Abmessungen weist der Ferritmagnet eine Remanenzflussdichte im Bereich von 0,4 T bis 0,44 T, vorzugsweise im Bereich zwischen 0,41 T und 0,43 T, und eine Koerzitivfeldstärke im Bereich von 240 kA/m bis 380 kA/m, vorzugsweise zwischen 280kA/m und 310 kA/m auf. Als Resultat der Materialeigenschaften des Magneten (also dessen Remanenzflussdichte und dessen Koerzitivfeldstärke) und dessen Abmessungen weist der so gebildete Ferritmagnet in einem Temperaturbereich von -40°C und +80°C durchgehen ein magnetisches Moment von $270*10^{-6}$ Vs*cm und $760*10^{-6}$ Vs*cm auf.

Ein Ringmagnet mit einer Remanenzflussdichte im Bereich von 0,4 T bis 0,44 T, einer Koerzitivfeldstärke im Bereich von 240 kA/m bis 380 kA/m einem Außendurchmesser von 34 mm, einem Innendurchmesser von 24 mm und einer Höhe von 10 mm weist ein magnetisches Moment von $280*10^{-6}$ Vs*cm auf. Ein Ringmagnet mit einer Remanenzflussdichte im Bereich von 0,4 T bis 0,44 T, einer Koerzitivfeldstärke im Bereich von 240 kA/m bis 380 kA/m einem Außendurchmesser von 45 mm, einem Innendurchmesser von 21 mm und einer Höhe von 15 mm weist ein magnetisches Moment von $765*10^{-}$ Vs*cm auf.

Das magnetische Moment eines Magneten mit einer Remanenzflussdichte im Bereich von 0,4 T bis 0,44 T und einer Koerzitivfeldstärke im Bereich von 240 kA/m bis 380 kA/m lässt sich mittels folgender Formel angeben: magnetisches Moment = Volumen des Magneten * 0,041. Dabei wird das so errechnete magnetgische Moment in $10^{-6}*$Vs*cm angegeben, wenn das Volumen des Magneten in $mm^3$ (Kubikmillimeter) angegeben wird.

Weiter vorzugsweise ist der Einfüllstutzen derart ausgebildet, dass der Ferritmagnet keine Schutzschicht aufweist.

Bei dem entsprechend ausgebildeten Einfüllstutzen ist es aufgrund der Korrosionsbeständigkeit des Ferritmagneten nicht notwendig, dass der Ferritmagnet von einer den Ferritmagneten umschließenden Schutzschicht umschlossen ist. Bei aus dem Stand der Technik bekannten Einfüllstutzen ist der Magnet stets von einer Schutzschicht umhüllt, die üblicherweise als Kunststoffschicht ausgebildet ist. Mit anderen Worten weist der Ferritmagnet keine diesen umhüllende/einschließende Schutzschicht auf.

Es ist auch möglich, dass der Ferritmagnet derart innerhalb des Einfüllstutzens angeordnet ist, dass der Ferritmagnet bei einem Befüllvorgang mit der in den Betriebsflüssigkeitsbehälter einzufüllenden Betriebsflüssigkeit in direkten Kontakt kommt. In diesem Fall ist der Ferritmagnet nicht durch eine Wandung des Einfüllstutzens von dem Einführkanal getrennt, sondern ist bei einem Befüllvorgang des Betriebsflüssigkeitsbehälters mit der einzufüllenden Betriebsflüssigkeit in direkten Kontakt bringbar. Dabei kann der Ferritmagnet einen Teil des Einführkanals des Einfüllstutzens definieren. Insbesondere wenn der Ferritmagnet ringförmig ausgebildet ist, kann der Ferritmagnet einen Teil des Einführkanals definieren. Da der Ferritmagnet von dem Einführkanal nicht über eine Materialwandung des Einfüllstutzens getrennt ist, wird das Magnetfeld des Ferritmagneten nicht unnötig geschwächt, so dass eine Betätigung einer Fehlbetankungsschutzvorrichtung in einem Zapfventil mit einer erhöhten Zuverlässigkeit ermöglicht ist.

Vorzugsweise ist der Einfüllstutzen derart ausgebildet, dass der Ferritmagnet ringförmig ausgebildet ist und den Einführkanal des Einfüllstutzens umschließt.

Durch eine entsprechende Ausgestaltung des Ferritmagneten ist eine zuverlässige Betätigung einer Fehlbetankungsschutzvorrichtung eines Zapfventils unabhängig von einer Winkelposition des Zapfventils innerhalb der Einfüllstutzens ermöglicht.

Vorzugsweise weist der ringförmige Ferritmagnet einen Außendurchmesser im Bereich von 34 mm bis 45 mm, einen Innendurchmesser im Bereich von 21 mm bis 24 mm und eine Bauhöhe von 10 mm bis 15 mm. Weiter vorzugsweise weist der ringförmige Ferritmagnet einen Außendurchmesser von 37 mm, einen Innendurchmesser von 21 mm und eine Bauhöhe von 13 mm auf. Unter der Bauhöhe des ringförmigen Ferritmagneten ist die Erstreckung des Ferritmagneten entlang dessen Längsachse zu verstehen. Die Längsachse des Ringmagneten ist dabei die durch den Mittelpunkt der Öffnung des Ringmagneten verlaufende Achse. Die Längsachse verläuft folglich parallel zu einem Normalenvektor der Öffnungsfläche des Ringmagneten.

Vorzugsweise ist der Einfüllstutzen derart ausgebildet, dass der Ferritmagnet den Einführkanal des Einfüllstutzens zumindest abschnittsweise bildet.

Durch eine entsprechende Ausbildung des Einfüllstutzens ist dieser besonders einfach aufgebaut. Darüber hinaus wird das Magnetfeld in dem Einführkanal durch kein Material des Einfüllstutzens abgeschwächt, dass eine Betätigung einer Fehlbetankungsschutzvorrichtung eines Zapfventils zuverlässiger erfolgen kann.

Vorzugsweise ist der Einfüllstutzen derart ausgebildet, dass der Einfüllstutzen eine Vielzahl von ringsegmentförmigen Ferritmagneten aufweist, die kreisförmig um den Einführkanal des Einfüllstutzens angeordnet sind.

Durch eine entsprechende Ausgestaltung des Einfüllstutzens ist eine Entlüftung des Betriebsflüssigkeitsbehälters während eines Betankungsvorganges verbessert ermöglicht, da ein Entlüftungsvolumenstrom durch einen Abstandsraum zwischen den jeweiligen ringsegmentförmigen Ferritmagneten ermöglicht ist.

Die jeweiligen ringsegmentförmigen Ferritmagnete sind in Umfangsrichtung des Einführkanals beabstandet / winkelbeabstandet zueinander angeordnet. Unter einer Vielzahl von ringsegmentförmigen Ferritmagneten sind zwei, drei, vier, fünf oder mehr ringsegmentförmige Ferritmagneten zu verstehen. Hinsichtlich der Anzahl der ringsegmentförmigen Ferritmagnete besteht insofern keine Beschränkung.

Weiter vorzugsweise ist der Einfüllstutzen derart ausgebildet, dass der Ferritmagnet einen Außendurchmesser im Bereich von 34 mm bis 45 mm, weiter vorzugsweise von 40 mm bis 45 mm und höchst vorzugsweise von 45 mm, einen Innendurchmesser im Bereich von 21 mm bis 24 mm und eine Bauhöhe von 10 mm bis 15 mm aufweist.

Durch eine entsprechende Ausbildung des Ferritmagneten weist dieser ein erhöhtes magnetisches Moment auf.

Weiter vorzugsweise ist der Einfüllstutzen derart ausgebildet, dass der Ferritmagnet stabförmig ausgebildet ist.

Weiter vorzugsweise ist der Einfüllstutzen derart ausgebildet, dass der Einfüllstutzen eine Vielzahl von stabförmigen Ferritmagneten aufweist, die kreisförmig um den Einführkanal des Einfüllstutzens angeordnet sind.

Weiter vorzugsweise ist der Einfüllstutzen derart ausgebildet, dass der Ferritmagnet in einem Temperaturbereich von -40°C bis +80°C ein reversibles magnetisches Moment von $270*10^{-6}$ Vs*cm und $760*10^{-6}$ Vs*cm, vorzugsweise von $420*10^{-6}$ Vs*cm und $530*10^{-6}$ Vs*cm aufweist.

Dies wird insbesondere dadurch erreicht, dass der Ferritmagnet als mit Lanthan und Kobalt dotierter Strontiumferrit-Magnet ausgebildet ist, der weiterhin vorzugsweise als Ringmagnet mit einem Außendurchmesser im Bereich von 34 mm bis 45 mm, weiter vorzugsweise von 40 mm bis 45 mm und höchst vorzugsweise von 45 mm, einen Innendurchmesser im Bereich von 21 mm bis 24 mm und eine Bauhöhe von 10 mm bis 15 mm ausgebildet ist.

Unter einem reversiblen magnetischen Moment ist ein magnetisches Moment zu verstehen, dass bei einer Temperatur T1 zwischen den Extremaltemperaturen (also zwischen -40°C und/oder +80°C) ein erstes magnetisches Moment aufweist, und nach Temperieren auf eine Extremaltemperatur (also -40°C und/oder +80°C) und anschließendem Temperieren auf die Temperatur T1 erneut das erste magnetische Moment aufweist.

Weitere Vorteile, Einzelheiten und Merkmale der Erfindung ergeben sich nachfolgend aus den erläuterten Ausführungsbeispielen. Dabei zeigen im Einzelnen:

Figur 1:      einen Querschnitt durch einen als Harnstoffbehälter ausgebildeten Betriebsflüssigkeitsbehälter mit einem schematisch dargestellten Einfüllstutzen gemäß der Erfindung;

Figur 2:      einen Querschnitt durch einen erfindungsgemäßen Einfüllstutzen;

Figur 3: eine perspektivische Darstellung eines Ferritmagneten, der in dem in Figur 2 dargestellten Einfüllstutzen eingebaut ist;

Figur 4A: eine Draufsicht auf zwei ringsegmentförmige Ferritmagnete;

Figur 4B: eine Draufsicht auf drei ringsegmentförmige Ferritmagnete;

Figur 4C: eine Draufsicht auf vier ringsegmentförmige Ferritmagnete;

Figur 5A: eine perspektivische Darstellung eines Gehäuses samt einer Vielzahl von im Gehäuse angeordneten Stabmagneten;

Figur 5B: das in Figur 5A dargestellte Gehäuse in Draufsicht ohne im Gehäuse angeordneten Stabmagneten; und

Figur 6: eine Auftragung des magnetischen Moments unterschiedlicher Magnete in Abhängigkeit der Temperatur der Magnete.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

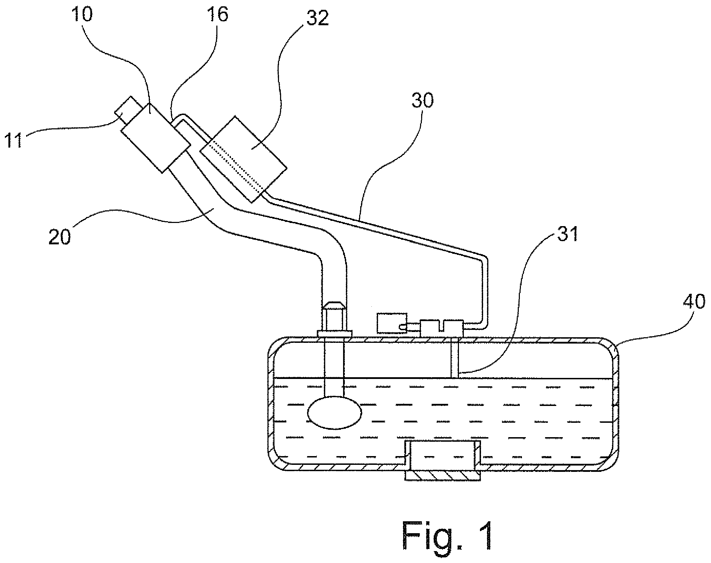

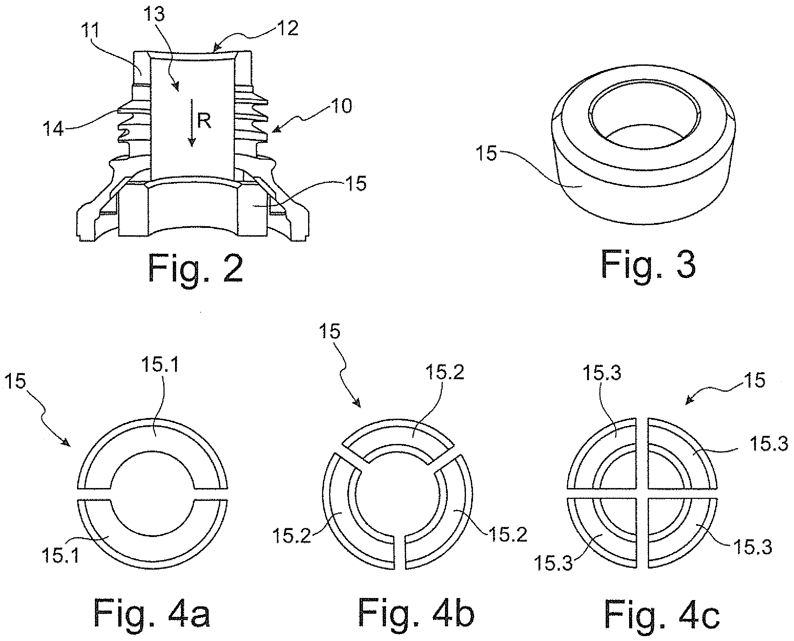

Aus Figur 1 ist ein Querschnitt eines Betriebsflüssigkeitsbehältersystems gezeigt, das einen erfindungsgemäßen Einfüllstutzen 10 aufweist. In dem dargestellten Ausführungsbeispiel ist ein Betriebsflüssigkeitsbehälter 40 des Betriebsflüssigkeitsbehältersystems als Harnstoffbehälter 40 ausgebildet. Der Harnstoffbehälter 40 ist über ein Einfüllrohr 20 bzw. einen Einfüllschlauch 20 mit einer Betriebsflüssigkeit, im vorliegenden Falle mit einer wässrigen Harnstofflösung befüllbar. An einem dem Harnstoffbehälter 40 abgewandten Ende des Einfüllrohrs 20 ist der erfindungsgemäße Einfüllstutzen 10 angeordnet. Ein oberer Teil des erfindungsgemäßen Einfüllstutzens 10 ist in Figur 2 in Alleinstellung dargestellt.

Der Harnstoffbehälterinnenraum ist folglich über das Einfüllrohr 20 mit dem Einfüllstutzen 10 fluidverbunden. Zum Entlüften des Harnstoffbehälterinnenraums weist das Betriebsflüssigkeitsbehältersystem bzw. das Harnstoffbehältersystem eine Entlüftungsleitung 30 auf, die in dem dargestellten Ausführungsbeispiel über ein Tauchrohr 31 mit dem Harnstoffbehälterinnenraum fluidverbunden ist. Anstelle des Tauchrohrs 31 kann auch ein Entlüftungsventil 31 in den Harnstoffbehälterinnenraum hineinragen. Die Entlüftungsleitung 30 ist mit dem Einfüllstutzen 10 über einen Anschluss 16 fluidverbunden, sodass aus dem Harnstoffbehälterinnenraum ausgetriebene Gase über den Einfüllstutzen 10 an die Atmosphäre abgeleitet werden können. Die Entlüftungsleitung 30 ist ferner mit einem Ausgleichsbehälter 32 fluidverbunden, der zwischen dem Einfüllstutzen 10 und dem Tauchrohr 31 angeordnet ist, und der sowohl mit dem Anschluss 16 als auch mit dem Tauchrohr 31 über die Entlüftungsleitung 30 fluidverbunden ist.

Figur 2 zeigt einen Querschnitt durch einen oberen Teil 11 eines Einfüllstutzengehäuses des erfindungsgemäßen Einfüllstutzens 10. Der obere Teil 11 des Einfüllstutzengehäuses ist als Mundlochstutzen 11 ausgebildet, der mit einem Gewindekragen 14 zum Aufschrauben eines in den Figuren nicht dargestellten Nachfüllgebindes versehen ist. Der Einfüllstutzen 10 weist eine Einführöffnung 12 auf, über die ein in den Figuren nicht dargestelltes Zapfventil in einen Einführkanal 13 des Einfüllstutzens 10 einführbar ist. Aus Figur 2 ist ersichtlich, dass der Einfüllstutzen 10 einen Magneten 15 aufweist, der in einer Betriebsflüssigkeitseinfüllrichtung R stromabwärts der Einführöffnung 12 angeordnet ist.

In dem dargestellten Ausführungsbeispiel ist der Magnet 15 als Ringmagnet 15 ausgebildet. Ferner ist der Magnet 15 als Ferritmagnet 15 ausgebildet. In Figur 3 ist der Ferritmagnet 15 in Alleinstellung und perspektivisch dargestellt.

Aus Figur 2 ist ersichtlich, dass der Ferritmagnet 15 derart innerhalb des Einfüllstutzens 10 angeordnet ist, dass der Ferritmagnet 15 bei einem Befüllvorgang mit der in den Harnstoffbehälter 40 einzufüllenden wässrigen Harnstofflösung in direkten Kontakt kommen kann. Denn ein Innenbereich des Ferritmagneten 15 definiert den Einführkanal 13 des Einfüllstutzens 10 zumindest abschnittsweise. Daher wird ein von dem Ferritmagneten 15 erzeugtes Magnetfeld in dem Einführkanal 13 des Einfüllstutzens 10 durch kein Material des Einfüllstutzens 10 abgeschwächt.

Aufgrund der Korrosionsbeständigkeit des Ferritmagneten 15 ist es nicht notwendig, dass der Ferritmagnet 15 von einer den Ferritmagneten 15 umschließenden Schutzschicht umschlossen ist. Folglich weist der Ferritmagnet 15 keine Schutzschicht auf.

In den Figuren 4A, 4B und 4C sind Ferritmagnete 15 dargestellt, die jeweils Ringsegmente 15_1, 15_2, 15_3 aufweisen. Bei dem Ausführungsbeispiel gemäß Figur 4A weist der Ringmagnet 15 zwei ringsegmentförmige Ferritmagneten 15_1 auf, die sich über einen Winkelbereich von jeweils 180° erstrecken. In dem Ausführungsbeispiel gemäß Figur 4B weist der Ferritmagnet 15 drei ringsegmentförmige Ferritmagnete 15_2 auf, die sich jeweils über einen Winkelbereich von 120° erstrecken. In dem Ausführungsbeispiel gemäß Figur 4C weist der Ferritmagnet 15 vier ringsegmentförmige Ferritmagneten 15_3 auf, die sich jeweils über einen Winkelbereich von 90° erstrecken. Durch eine entsprechende Ausbildung des Ferritmagneten 15 ist eine verbesserte Entlüftung des Harnstoffbehälters 40 während eines Betankungsvorganges ermöglicht, da ein Entlüftungsvolumenstrom durch einen Abstandsraum zwischen den jeweiligen ringsegmentförmigen Ferritmagneten 15_1, 15_2, 15_3 ermöglicht ist. Denn die jeweiligen ringsegmentförmigen Ferritmagnete 15_1, 15_2, 15_3 sind in Umfangsrichtung des Einführkanals 13 zueinander beabstandet/winkelbeabstandet.

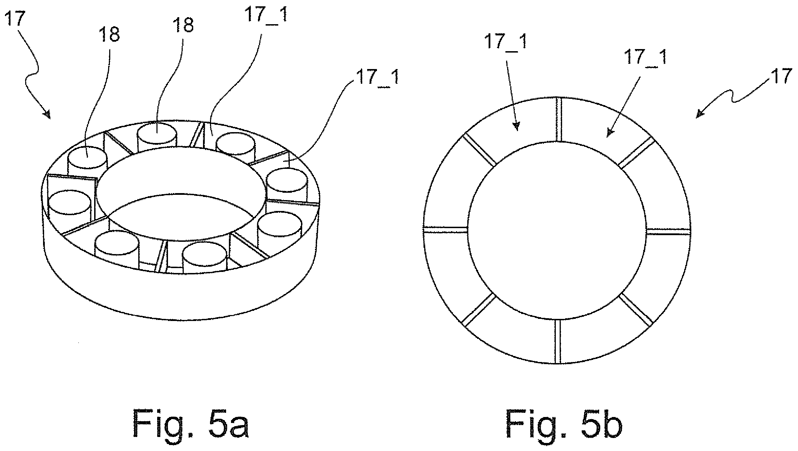

Die Figur 5A zeigt eine alternative Ausgestaltung des Ferritmagneten. Dabei sind eine Vielzahl von stabförmigen Ferritmagneten 18 in Kammern 17_1 eines Gehäuses 17 angeordnet, wobei das Gehäuse 17 in Alleinstellung und ohne in den Kammern 17_1 angeordneten Stabmagneten 18 in Figur 5B dargestellt ist. Das Gehäuse weist eine Außenform wie der in den Figuren 2 und 3 gezeigte Ringmagnet auf. Auch die Anordnung des Gehäuses 17 in dem Einfüllstutzen 10 ist identisch zu der in den Figuren 2 und 3 gezeigten Anordnung des Ringmagneten 15 im Einfüllstutzen 10.

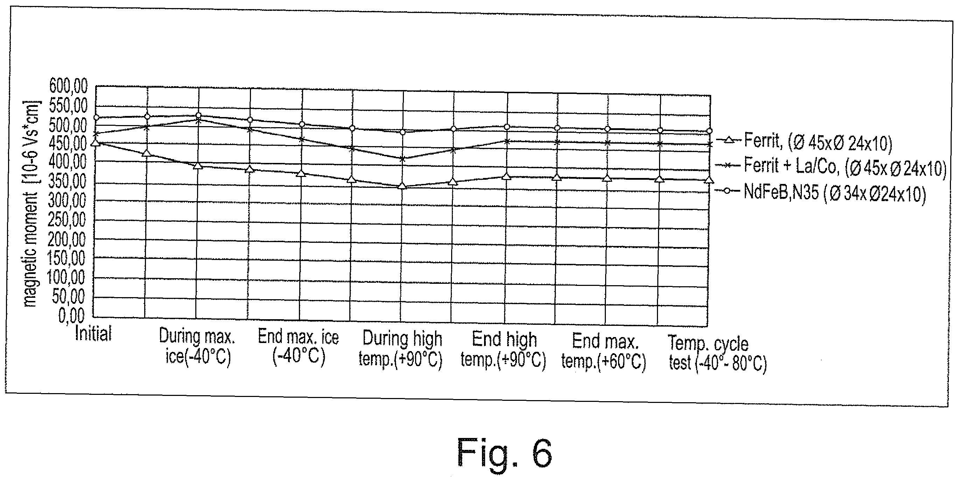

Figur 6 zeigt den Verlauf magnetischer Momente unterschiedlicher Magnete in Abhängigkeit von der Temperatur der Magnete. Dabei ist die in Figur 6 oben dargestellte Kurve das magnetische Moment eines Neodym-Eisen-Bohr Magneten mit einem Außendurchmesser von 34 mm, einem Innendurchmesser von 24 mm und einer Höhe von 10 mm. Die in der Mitte dargestellte Kurve stellt das magnetische Moment eines erfindungsgemäßen Ferritmagneten 15 dar, der mit Lanthan und Kobalt dotiert ist. Dieser Magnet weist einen Außendurchmesser von 45 mm, einen Innendurchmesser von 24 mm und eine Höhe von 10 mm auf. Die in Figur 5 unten dargestellte Kurve zeigt das magnetische Moment eines undotierten Ferritmagneten, der einen Außendurchmesser von 45 mm, einen Innendurchmesser von 24 mm und eine Höhe von 10 mm aufweist.

Wie aus Figur 6 ersichtlich ist, ist das magnetische Moment des mit Lanthan und Kobalt dotierten Ferritmagneten 15 erheblich größer als das magnetische Moment des undotierten Magneten. Das Verhalten, d.h. das Ansteigen/Absinken des magnetischen Moments des mit Lanthan und Kobalt dotierten/versetzten Strontiumferrit-Magneten ist dem Verhalten eines Neodym-Eisen-Magneten unter verschiedenen Temperaturen sehr ähnlich und ähnlich reversibel wie bei einem Neodym-Eisen-Magneten. Aus Figur 6 ist ferner ersichtlich, dass eine Änderung des magnetischen Moments eines undotierten Ferritmagneten im Wesentlichen irreversibel ist. Dies ist in der im Vergleich zu dem mit Lanthan und Kobalt dotierten Strontiumferrit-Magneten geringeren Koerzitivfeldstärke begründet.

**Bezugszeichenliste**

| | |
|---|---|
| 10 | Einfüllstutzen |
| 11 | oberer Teil eines Einfüllstutzengehäuses / Mundlochstutzen |
| 12 | Einführöffnung |
| 13 | Einführkanal |
| 14 | Gewindekragen (des Einfüllstutzens) |
| 15 | Magnet / Ferritmagnet / Ringmagnet / Ringferritmagnet |
| 15_1 | ringsegmentförmiger Ferritmagnet |
| 15_2 | ringsegmentförmiger Ferritmagnet |
| 15_3 | ringsegmentförmiger Ferritmagnet |
| 16 | Anschluss |
| 17 | Gehäuse (zur Aufnahme von Stabmagneten) |
| 17_1 | Kammer des Gehäuses |
| 18 | Stabmagnet |
| 20 | Einfüllrohr / Einfüllschlauch |
| 30 | Entlüftungsleitung |
| 31 | Tauchrohr / Entlüftungsventil |
| 32 | Ausgleichsbehälter |
| 40 | Betriebsflüssigkeitsbehälter / Harnstoffbehälter |
| R | Betriebsflüssigkeitseinfüllrichtung |

**Patentansprüche**

1. Einfüllstutzen (10) für einen Betriebsflüssigkeitsbehälter (40) für ein Kraftfahrzeug, wobei der Einfüllstutzen (10) folgende Merkmale aufweist:

   - der Einfüllstutzen (10) weist eine Einführöffnung (12) auf, über die ein Zapfventil in einen Einführkanal (13) des Einfüllstutzens (10) einführbar ist;
   - der Einfüllstutzen (10) weist einen Magneten (15, 18) auf, der in einer Betriebsflüssigkeitseinfüllrichtung (R) stromabwärts der Einführöffnung (12) angeordnet ist;
   - der Magnet (15, 18) ist als Strontiumferrit-Magnet (15, 18) ausgebildet,

   wobei der Einfüllstutzen (10) **dadurch gekennzeichnet ist, dass** der Strontiumferrit-Magnet (15, 18) mit Lanthan und/oder Kobalt dotiert ist.

2. Einfüllstutzen (10) nach Anspruch 1, **dadurch gekennzeichnet, dass** das Material des Strontiumferrit-Magneten (15, 18) als $Sr_{1-x}La_xFe_{12-y}Co_yO_{19}$ ausgebildet ist, wobei x und y in folgenden Wertebereichen sind:

$$0,1 \leq x \leq 0,16;$$

$$0,1 \leq y \leq 0,16.$$

3. Einfüllstutzen (10) nach einem der vorhergehenden Ansprüche, **dadurch gekennzeichnet, dass** der Strontiumferrit-Magnet (15, 18) eine Remanenzflussdichte im Bereich-von 0,4 T bis 0,44 T und eine Koerzitivfeldstärke im Bereich von 240 kA/m bis 380 kA/m aufweist.

4. Einfüllstutzen (10) nach einem der vorhergehenden Ansprüche, **dadurch gekennzeichnet, dass** der Strontiumferrit-Magnet (15, 18) keine Schutzschicht aufweist.

5. Einfüllstutzen (10) nach einem der vorhergehenden Ansprüche, **dadurch gekennzeichnet, dass** der Strontiumferrit-Magnet (15) ringförmig ausgebildet ist und den Einführkanal (13) des Einfüllstutzens (10) umschließt.

6. Einfüllstutzen (10) nach Anspruch 5, **dadurch gekennzeichnet, dass** der Strontiumferrit-Magnet (15) den Einführkanal (13) des Einfüllstutzens (10) zumindest abschnittsweise bildet.

7. Einfüllstutzen (10) nach einem der Ansprüche 1 bis 4, **dadurch gekennzeichnet, dass** der Einfüllstutzen (10) eine Vielzahl von ringsegmentförmigen Strontiumferrit-Magneten (15_1, 15_2, 15_3) aufweist, die kreisförmig um den Einführkanal (13) des Einfüllstutzens (10) angeordnet sind.

8. Einfüllstutzen (10) nach einem der Ansprüche 5 bis 7, **dadurch gekennzeichnet, dass** der Strontiumferrit-Magnet (15) einen Außendurchmesser im Bereich von 34 mm bis 45 mm, einen Innendurchmesser im Bereich von 21 mm bis 24 mm und eine Bauhöhe von 10 mm bis 15 mm aufweist.

9. Einfüllstutzen (10) nach einem der Ansprüche 1 bis 4, **dadurch gekennzeichnet, dass** der Strontiumferrit-Magnet (18) stabförmig ausgebildet ist.

10. Einfüllstutzen (10) nach einem der Ansprüche 1 bis 4, **dadurch gekennzeichnet, dass** der Einfüllstutzen (10) eine Vielzahl von stabförmigen Strontiumferrit-Magneten (18) aufweist, die kreisförmig um den Einführkanal (13) des Einfüllstutzens (10) angeordnet sind.

11. Einfüllstutzen (10) nach einem der vorhergehenden Ansprüche, **dadurch gekennzeichnet, dass** der Strontiumferrit-Magnet (15, 18) in einem Temperaturbereich von -40°C bis +80°C ein reversibles magnetisches Moment von $270*10^{-6}$ Vs*cm und $760*10^{-6}$ Vs*cm, vorzugsweise von $420*10^{-6}$ Vs*cm und $530*10^{-6}$ Vs*cm aufweist.

**Claims**

1. Filler neck (10) for a working fluid container (40) for a motor vehicle, the filler neck (10) comprising the following features:

- the filler neck (10) comprises an insertion opening (12) via which a pump nozzle can be inserted into an insertion channel (13) of the filler neck (10);
- the filler neck (10) comprises a magnet (15, 18) which is arranged downstream of the insertion opening (12) in a working fluid filling direction (R);
- the magnet (15, 18) is in the form of a strontium ferrite magnet (15, 18),

the filler neck (10) being **characterized in that** the strontium ferrite magnet (15, 18) is doped with lanthanum and/or cobalt.

2. Filler neck (10) according to claim 1, **characterized in that** the material of the strontium ferrite magnet (15, 18) is in the form of $Sr_{1-x}La_xFe_{12-y}Co_yO_{19}$, where x and y are in the following value ranges:

$$0.1 \leq x \leq 0.16;$$

$$0.1 \leq y \leq 0.16.$$

3. Filler neck (10) according to either of the preceding claims,
**characterized in that** the strontium ferrite magnet (15, 18) has a residual flux density in the range of 0.4 T to 0.44 T and a coercivity in the range of 240 kA/m to 380 kA/m.

4. Filler neck (10) according to any of the preceding claims,
**characterized in that** the strontium ferrite magnet (15, 18) does not comprise a protective layer.

5. Filler neck (10) according to any of the preceding claims,
**characterized in that** the strontium ferrite magnet (15) is annular and surrounds the insertion channel (13) of the filler neck (10).

6. Filler neck (10) according to claim 5, **characterized in that** the strontium ferrite magnet (15) forms the insertion channel (13) of the filler neck (10) at least in portions.

7. Filler neck (10) according to any of claims 1 to 4, **characterized in that** the filler neck (10) comprises a plurality of ring-segment-shaped strontium ferrite magnets (15_1, 15_2, 15_3) which are arranged in a circle around the insertion channel (13) of the filler neck (10).

8. Filler neck (10) according to any of claims 5 to 7, **characterized in that** the strontium ferrite magnet (15) has an outer diameter in the range of 34 mm to 45 mm, an inner diameter in the range of 21 mm to 24 mm, and an overall height of 10 mm to 15 mm.

9. Filler neck (10) according to any of claims 1 to 4, **characterized in that** the strontium ferrite magnet (18) is rod-shaped.

10. Filler neck according to any of claims 1 to 4, **characterized in that** the filler neck (10) comprises a plurality of rod-shaped strontium ferrite magnets (18) which are arranged in a circle around the insertion channel (13) of the filler neck (10).

11. Filler neck (10) according to any of the preceding claims,
**characterized in that** the strontium ferrite magnet (15, 18) has, in a temperature range of -40°C to +80°C, a reversible magnetic moment of $270*10^{-6}$ Vs*cm and $760*10^{-6}$ Vs*cm, preferably $420*10^{-6}$ Vs*cm and $530*10^{-6}$ Vs*cm.

## Revendications

1. Tubulure de remplissage (10) pour un réservoir de liquide de fonctionnement (40) pour un véhicule automobile, la tubulure de remplissage (10) présentant les caractéristiques suivantes :

   la tubulure de remplissage (10) présente un orifice d'insertion (12) par l'intermédiaire duquel un pistolet distributeur peut être inséré dans un canal d'insertion (13) de la tubulure de remplissage (10) ;
   la tubulure de remplissage (10) présente un aimant (15, 18) disposé en aval de l'orifice d'insertion (12) dans un sens de remplissage de liquide de fonctionnement (R) ;
   l'aimant (15, 18) est réalisé en tant qu'aimant en ferrite de strontium (15, 18),
   la tubulure de remplissage (10) étant **caractérisée en ce que** l'aimant en ferrite de strontium (15, 18) est dopé au lanthane et/ou au cobalt.

2. Tubulure de remplissage (10) selon la revendication 1,
   **caractérisée en ce que** le matériau de l'aimant en ferrite de strontium (15, 18) est réalisé en tant que $Sr_{1-x}La_xFe_{12-y}Co_yO_{19}$, où x et y se trouvent dans les plages de valeurs suivantes :

$$0,1 \leq x \leq 0,16 \; ;$$

$$0,1 \leq y \leq 0,16.$$

3. Tubulure de remplissage (10) selon l'une des revendications précédentes, **caractérisée en ce que** l'aimant en ferrite de strontium (15, 18) présente une induction rémanente dans la plage de 0,4 T à 0,44 T et une intensité de champ coercitif dans la plage de 240 kA/m à 380 kA/m.

4. Tubulure de remplissage (10) selon l'une des revendications précédentes, **caractérisée en ce que** l'aimant en ferrite de strontium (15, 18) ne présente aucune couche de protection.

5. Tubulure de remplissage (10) selon l'une des revendications précédentes, **caractérisée en ce que** l'aimant en ferrite de strontium (15) est réalisé en forme d'anneau et entoure le canal d'insertion (13) de la tubulure de remplissage (10).

6. Tubulure de remplissage (10) selon la revendication 5,
   **caractérisée en ce que** l'aimant en ferrite de strontium (15) forme, au moins dans certaines régions, le canal d'insertion (13) de la tubulure de remplissage (10).

7. Tubulure de remplissage (10) selon l'une des revendications 1 à 4, **caractérisée en ce que** la tubulure de remplissage (10) présente une pluralité d'aimants en ferrite de strontium (15_1, 15_2, 15_3) en forme de segment annulaire, lesquels aimants sont disposés de manière circulaire autour du canal d'insertion (13) de la tubulure de remplissage (10).

8. Tubulure de remplissage (10) selon l'une des revendications 5 à 7, **caractérisée en ce que** l'aimant en ferrite de strontium (15) présente un diamètre externe situé dans la plage de 34 mm à 45 mm, un diamètre interne situé dans la plage de 21 mm à 24 mm et une épaisseur de 10 mm à 15 mm.

9. Tubulure de remplissage (10) selon l'une des revendications 1 à 4, **caractérisée en ce que** l'aimant en ferrite de strontium (18) est réalisé en forme de tige.

10. Tubulure de remplissage (10) selon l'une des revendications 1 à 4, **caractérisée en ce que** la tubulure de remplissage (10) présente une pluralité d'aimants en ferrite de strontium (18) en forme de tige, lesquels aimants sont disposés de manière circulaire autour du canal d'insertion (13) de la tubulure de remplissage (10).

11. Tubulure de remplissage (10) selon l'une des revendications précédentes, **caractérisée en ce que** l'aimant en ferrite de strontium (15, 18) présente un moment magnétique réversible de $270*10^{-6}$ Vs*cm et $760*10^{-6}$ Vs*cm, de préférence de $420*10^{-6}$ Vs*cm et $530*10^{-6}$ Vs*cm, dans une plage de température de -40 °C à +80 °C.

Fig. 1

Fig. 3

Fig. 2

Fig. 4a

Fig. 4b

Fig. 4c

Fig. 5a

Fig. 5b

EP 3 576 972 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 202010001147 U1
- EP 2927040 A1
- EP 2789490 A1
- DE 102014010989 A1
- EP 2199266 A1